(19) Europäisches Patentamt
European Patent Office
Office européen des brevets

(11) Veröffentlichungsnummer: **0 104 375**
**B1**

# (12) EUROPÄISCHE PATENTSCHRIFT

(45) Veröffentlichungstag der Patentschrift: **15.10.86**

(21) Anmeldenummer: **83107753.2**

(22) Anmeldetag: **06.08.83**

(51) Int. Cl.⁴: **C 07 F 9/50**, C 07 F 9/65, B 01 J 31/24, B 01 J 31/28

(54) **Neue, phosphorhaltige Biphenylderivate und deren Verwendung für asymmetrische Hydrierungen und enantioselektive Wasserstoffverschiebungen.**

(30) Priorität: **27.08.82 CH 5109/82**
**01.07.83 CH 3641/83**

(43) Veröffentlichungstag der Anmeldung:
**04.04.84 Patentblatt 84/14**

(45) Bekanntmachung des Hinweises auf die Patenterteilung:
**15.10.86 Patentblatt 86/42**

(84) Benannte Vertragsstaaten:
**AT BE CH DE FR GB IT LI NL**

(56) Entgegenhaltungen:
**EP-A-0 000 403**
**EP-A-0 043 382**
**DE-B-1 235 913**
**US-A-4 174 447**

**Patent Abstracts of Japan, Band 5, Nr. 75, 19. Mai 1981**
**Patent Abstracts of Japan, Band 4, Nr. 98, 15. Juli 1980, Seite 115C18**

(73) Patentinhaber: **F. HOFFMANN- LA ROCHE & CO. Aktiengesellschaft, CH- 4002 Basel (CH)**

(72) Erfinder: **Hansen, Hans- Jürgen, Prof., Bettingerstrasse 67, CH- 4125 Riehen (CH)**
Erfinder: **Schmid, Rudolf, Dr., Sempacherstrasse 51, CH- 4053 Basel (CH)**

(74) Vertreter: **Cottong, Norbert A., Grenzacherstrasse 124 Postfach 3255, CH- 4002 Basel (CH)**

**EP 0 104 375 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Aus der FA-A1-53-136 605 (Publ. Nr. 55-61937) sind bereits chirale Phosphorverbindungen bekannt, worin als chirales Element ein Binaphtylrest enthalten ist; diese Phosphorverbindungen dienen in Form ihrer Rhodium-Komplexe als Katalysatoren für asymmetrische Hydrierungen.

Die vorliegende Erfindung betrifft neue chirale, in (R)- oder (S)-Form vorliegende Phosphorverbindungen der allgemeinen Formel

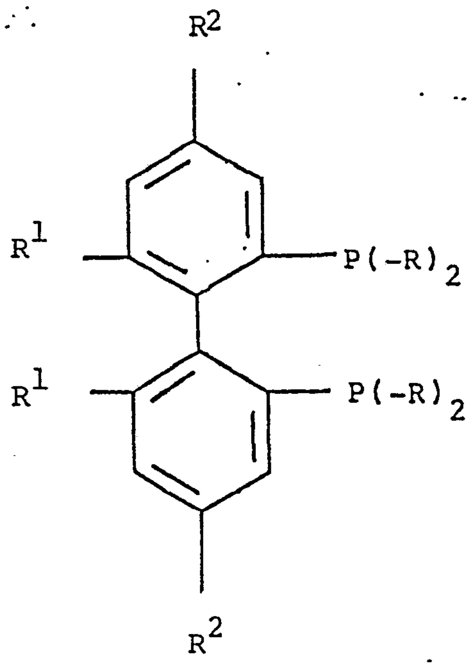

I

worin $R^1$ niederes Alkyl, R Phenyl oder Methyl- oder Fluor- substituiertes Phenyl und $R^2$ Di-niederes Alkylamino bedeuten.

Die Erfindung betrifft ferner die Herstellung der Phosphorverbindungen der Formel I, sowie deren Verwendung für asymmetrische Hydrierungen oder auch für enantioselektive Wasserstoffverschiebungen in prochiralen allylischen Systemen.

Der Ausdruck "niederes Alkyl" bedeutet im Rahmen der vorliegenden Erfindung, geradkettige oder verzweigte Alkylgruppen mit 1 bis 4 Kohlenstoffatomen wie Methyl, Aethyl, Propyl, Isopropyl, n-Butyl, Isobutyl und tert. Butyl. Der Ausdruck "Di-niederes Alkylamino" bedeutet Gruppen, in denen der Alkylrest die vorhergehende Bedeutung hat.

Unter dem im nachfolgenden verwendeten Ausdruck "austretende Gruppe" sind im Rahmen der vorliegenden Erfindung Gruppen zu verstehen wie Halogen, insbesondere Chlor und Brom, sowie Alkoxygruppen wie Methoxy.

Beispiel einer bevorzugten Verbindung der Formel I ist

(R)- oder (S)-(4,4'-Bis(dimethylamino)-6,6'-dimethyl-2,2'-biphenylylen)-bis(diphenvlphosphin).

Die erfindungsgemässen Verbindungen der Formel I können dadurch hergestellt werden, dass man

a) eine racemische oder optisch aktive Verbindung der Formel

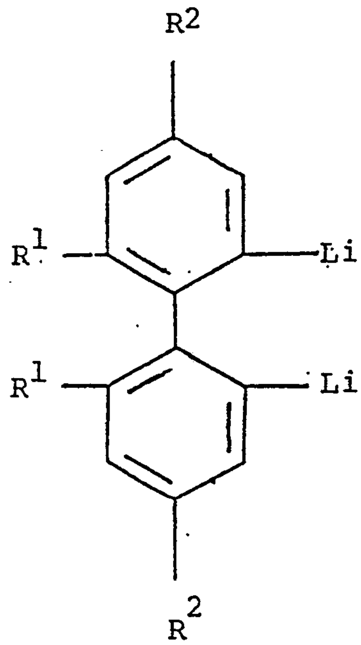

II

worin $R^1$ und $R^2$ die obige Bedeutung haben, mit einer Verbindung der allgemeinen Formel

$X-P(R)_2$ III

worin R die obige Bedeutung hat und X eine austretende Gruppe darstellt,

umsetzt, oder

b) eine racemische oder optisch aktive Verbindung der allgemeinen Formel II mit einer Verbindung der allgemeinen Formel

$$X-\overset{O}{\overset{\|}{P}}(-R)_2 \qquad IV$$

worin R und X die obige Bedeutung haben,

umsetzt und die so erhaltene Verbindung der allgemeinen Formel

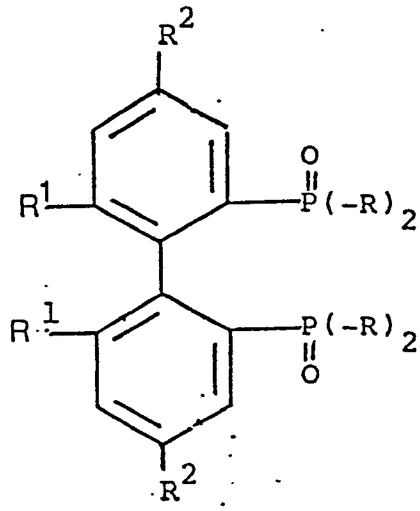

V

worin R, $R^1$ und $R^2$ die obige Bedeutung haben, reduziert und, gegebenenfalls, eine erhaltene racemische Verbindung der Formel I in die optischen Antipoden auftrennt.

Die Umsetzung einer Verbindung der Formel II mit einer Verbindung der Formel III kann in an sich bekannter Weise erfolgen. Die Umsetzung erfolgt zweckmässig in einem inerten, aprotischen organischen Lösungsmittel, wie z.B. einem Aether wie etwa Diäthyläther, Tetrahydrofuran, Dimethoxyäthan und dergleichen. Die Reaktion erfolgt auch zweckmässig bei einer Temperatur von etwa Raumtemperatur bis etwa -120°C, vorzugsweise unterhalb etwa -60°C und insbesondere unterhalb etwa -90°C. Der Druck ist hierbei keine kritische Grösse und die Reaktion kann ohne weiteres bei Atmosphärendruck erfolgen.

Die Umsetzung einer Verbindung der Formel II mit einer Verbindung der Formel IV kann in zur vorhergehend beschriebenen Umsetzung analoger Weise durchgeführt werden.

Die Reduktion einer Verbindung der Formel V kann in an sich bekannter Weise durchgeführt werden. Zweckmässig erfolgt diese Reduktion mit Silanen wie Phenylsilane, Trichlorsilan, Hexachlordisilan. Als Lösungsmittel können inerte, organische Lösungsmittel wie aromatische Kohlenwasserstoffe, wie Benzol, Toluol und dergleichen, halogenierte Kohlenwasserstoffe wie etwa Chloroform, Dichlormethan oder auch Acetonitril und dergleichen verwendet werden. In gewissen Fällen kann die Reduktion auch in Abwesenheit von Lösungsmitteln durchgeführt werden, z.B. im Falle der Verwendung von Phenylsilanen. Die Reduktion erfolgt zweckmässig bei erhöhter Temperatur und vorzugsweise bei Rückflusstemperatur des Reaktionsgemisches. Der Druck ist keine kritische Grösse bei dieser Reaktion, welche somit ohne weiteres bei Atmosphärendruck aber, gewünschtenfalls, auch bei erhöhtem Druck durchgeführt werden kann.

Die Spaltung einer Verbindung der Formel I kann in an sich bekannter Weise durchgeführt werden. Zweckmässig erfolgt dies z.B. durch Komplexbildung mit Di-μ-chloro-bis-[(R)-2-(1-dimethylamino)äthyl)phenyl-C,N]-dipalladium(II) oder mit Di-μ-chloro-bis[(S)-2-(1-(dimethylamino)äthyl)-phenyl-C,N]-dipalladium(II), Trennung der beiden diastereomeren Komplexe durch fraktionierte Kristallisation und anschliessende reduktive Freisetzung der entsprechenden Antipoden. Die Spaltung kann auch erfolgen durch Salzbildung mit Formaldehyd in Gegenwart einer optisch aktiven Säure, wie z.B. Camphersulfonsäure, Kristallisation und anschliessende Freisetzung des entsprechenden Antipoden mit Base.

Die als Ausgangsmaterial verwendeten Verbindungen der Formeln III und IV sind bekannte Verbindungen oder Analoge bekannter Verbindungen, welche leicht in an sich bekannter Weise hergestellt werden können.

Die racemischen Verbindungen der Formel II sind ebenfalls bekannte Verbindungen oder Analoge bekannter Verbindungen, welche ebenfalls in an sich bekannter Weise hergestellt werden können. Die entsprechenden optisch aktiven Verbindungen der Formel II sind jedoch neu und bilden ebenfalls Gegenstand der vorliegenden Erfindung.

Die optisch aktiven Verbindungen der Formel II können z.B. ausgehend von Verbindungen der allgemeinen Formel

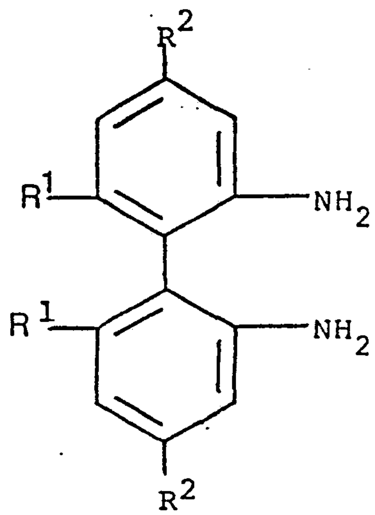

VI

worin $R^1$ und $R^2$ die obige Bedeutung haben, hergestellt werden.

Die racemischen Verbindungen der Formel VI können in an sich bekannter Weise in die optischen Antipoden aufgespalten werden. Dies erfolgt z.B. durch Salzbildung mit optisch aktiven Säuren wie etwa Weinsäure und anschliessend Trennung durch fraktionierte Kristallisation. Die so erhaltenen optisch aktiven Verbindungen der Formel VI können sodann, ebenso wie die entsprechenden Racemate, in an sich bekannter Weise in die entsprechenden racemischen oder optisch aktiven Verbindungen der Formel II übergeführt werden. Dies kann z.B. dadurch erfolgen, dass man eine racemische oder optisch aktive Verbindung der allgemeinen Formel VI mittels Diazotierung und Sandmeyer-Reaktion bzw. Umsetzung mit einem Alkalimetalljodid in eine Verbindung der allgemeinen Formel

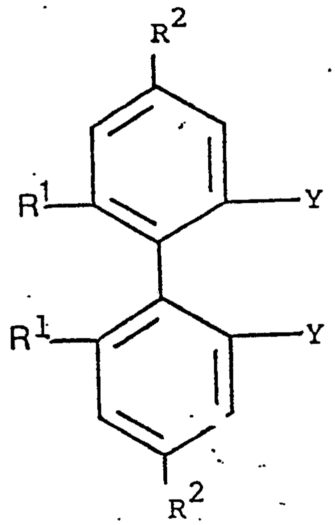

VII

worin $R^1$ und $R^2$ die obige Bedeutung haben und Y Chlor, Brom oder Jod darstellt, überführt und diese anschliessend z.B. durch Behandlung mit einem Alkyllithium wie etwa tert.-Butyllithium oder auch mit metallischem Lithium in eine Verbindung der Formel II überführt.

Die zur Herstellung von optisch aktiven Verbindungen der Formel II nötige Racematspaltung kann auch mit Verbindungen der allgemeinen Formel

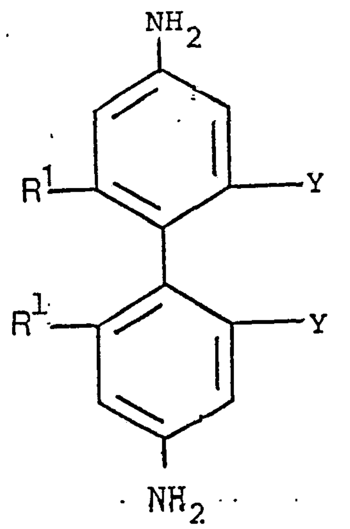

VIII

worin $R^1$ und Y die obige Bedeutung haben,

in zur Spaltung von Verbindungen der allgemeinen Formel VI analoger Weise erfolgen. Nach erfolgter Spaltung können dann die Aminogruppen alkyliert werden zu den Verbindungen der Formel VII.

Die erfindungsgemässen Phosphorverbindungen der Formel I bilden Komplexe mit Metallen der Gruppe VIII, insbesondere mit Rhodium, Iridium und Cobalt, welche als Katalysatoren bei asymmetrischen Hydrierungen und auch für enantioselektive Wasserstoffverschiebungen in prochiralen allylischen Systemen verwendbar sind. Besonders bevorzugt ist Rhodium. Diese Katalysatoren, d.h. die Komplexe aus einem Metall der Gruppe VIII und den Phosphorverbindungen der Formel I sind neu und ebenfalls Gegenstand der vorliegenden Erfindung. Diese Katalysatoren können in einfacher und an sich bekannter Weise hergestellt werden, z.B. indem man eine Verbindung der Formel I mit einer Verbindung, welche ein Metall der Gruppe VIII abgeben kann, in einem geeigneten inerten organischen oder wässrigen Lösungsmittel umsetzt. Verbindungen, welche ein Metall der Gruppe VIII abgeben können, sind bekannt. Als geeignete, z.B. Rhodium abgebende Verbindungen können beispielsweise genannt werden Rhodiumtrichlorid-Hydrat, Rhodiumtribromid-Hydrat, Rhodiumsulfat, oder auch organische Rhodiumkomplexe mit Aethylen oder Propylen sowie mit bis-Olefinen, z.B. 1,5-Cyclooctadien, 1,5-Hexadien, Bicyclo-[2.2.1]hepta-2, 5-dien oder mit weiteren Dienen, welche mit Rhodium leicht lösliche Komplexe bilden. Bevorzugte, Rhodium abgebende Verbindungen sind z.B. Di-μ-chloro-bis-[$\eta^4$-1,5-cyclooctadien]dirhodium(I) oder auch Di-μ-chloro-bis[$\eta^4$-norbornadien]dirhodium(I).

Als weitere geeignete, eines der anderen Metalle der Gruppe VIII abgebende Verbindungen können beispielsweise noch genannt werden: Iridiumtrichlorid-Hydrat, Di-μ-chloro-bis-[$\eta^4$-1,5-cyclooctadien]diiridium(I), Cobaltdichlorid, Cobalt(II)-acetat oder -naphthenat, Cobalt(II)- oder Cobalt(III)-acetylacetonat und dergleichen.

Die vorhergehend erwähnten Komplexe aus phosphorverbindungen der Formel I und Metallen der Gruppe VIII sind, wie erwähnt, verwendbar als Katalysatoren bei asymmetrischen Hydrierungen, z.B. bei der asymmetrischen Hydrierung von Verbindungen vom Typus der α-(Acylamino)-acrylsäuren, wie etwa 2-(Acetylamino)-3-(4-acetyloxy-3-methoxyphenyl)-2-propensäure.

Weiterhin sind die erwähnten Katalysatoren verwendbar für enantioselektive Wasserstoffverschiebungen in prochiralen allylischen Systemen. Besonders interessant sind sie z.B. im Zusammenhang mit der Herstellung von optisch aktiven Verbindungen der allgemeinen Formel

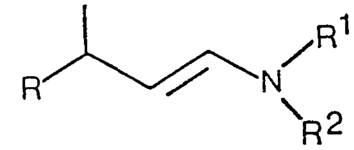 IX

worin R geschütztes Hydroxymethyl oder einen Rest der Formel

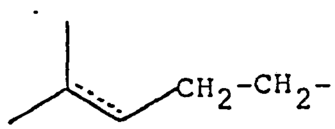 oder 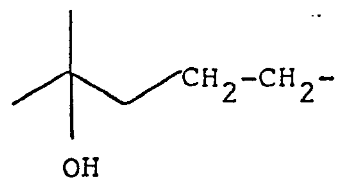

darstellt, worin die gestrichelte Linie eine zusätzliche Bindung darstellen kann, und $R^1$ und $R^2$ niederes Alkyl (1-7 C-Atome) bedeuten,
ausgehend von Verbindungen der allgemeinen Formel

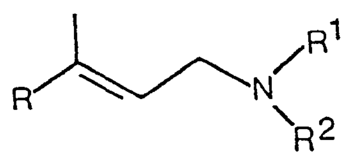 X

worin R, $R^1$ und $R^2$ die obige Bedeutung haben.

Die Verbindungen IX bzw. die daraus durch Hydrolyse erhaltenen Aldehyde sowie die von letzteren abgeleiteten Säuren und Alkohole sind z.B. von Interesse als Zwischenprodukte bei der Synthese der Seitenketten der Vitamine E und $K_1$.

Zur Durchführung der erwähnten asymmetrischen Hydrierungen, sowie der erwähnten Wasserstoffverschiebungen, können die Phosphorverbindungen der Formel I als solche, in einer Lösung einer zu behandelnden Verbindung, mit einer ein Metall der Gruppe VIII abgebenden Verbindung in Kontakt gebracht werden. Andererseits können die Phosphorverbindungen der Formel I zunächst in einem geeigneten Lösungsmittel mit einer ein Metall der Gruppe VIII abgebenden Verbindung zu dem entsprechenden Katalysator-Komplex umgesetzt werden und dieser dann zu einer Lösung einer zu behandelnden Verbindung gegeben werden, wobei die letztere Methode bevorzugt ist.

Sowohl die Umsetzung der Phosphorverbindungen der Formel I mit einer ein Metall der Gruppe VIII abgebenden Verbindung wie auch die erwähnten asymmetrischen Hydrierungen und Wasserstoffverschiebungen können in geeigneten, unter den Reaktionsbedingungen inerten organischen Lösungsmitteln durchgeführt werden. Als solche können insbesondere genannt werden niedere Alkanole wie z.B. Methanol oder Aethanol, aromatische Kohlenwasserstoffe wie Benzol oder Toluol, cyclische Aether wie Tetrahydrofuran oder Dioxan, Ester wie Essigester oder auch Gemische hiervon. Weiterhin können die Komplexbildungen auch noch in wässrigem Medium oder in Dichlormethan durchgeführt werden.

Das Verhältnis zwischen Metall der Gruppe VIII und den Liganden der Formel 1 liegt zweckmässig zwischen etwa 0,05 und etwa 5 Mol, vorzugsweise zwischen etwa 0,5 und etwa 2 Mol Metall pro Mol Ligand der Formel I.

Die Menge an Metall, in den Komplexen mit den Liganden der Formel I, bezogen auf die zu behandelnden Verbindungen, liegt zweckmässig zwischen etwa 0,01 und etwa 2 Mol %, vorzugsweise zwischen etwa 0,05 und etwa 1 Mol % und insbesondere zwischen etwa 0,1 und etwa 0,5 Mol %.

Die asymmetrischen Hydrierungen unter Verwendung von Metall-Komplexen mit den Liganden der Formel I

können zweckmässig bei Temperaturen von etwa 20°C bis etwa 100°C, vorzugsweise von etwa 40°C bis etwa 90°C, durchgeführt werden. Diese Hydrierungen erfolgen zweckmässig unter Druck, insbesondere unter einem Druck von etwa 1 bis 100 bar, vorzugsweise 2 bis 50 bar.

Die erwähnten Wasserstoffverschiebungen unter Verwendung von Metall-Komplexen mit dem Liganden der Formel 1 können zweckmässig in einem inerten, organischen Lösungsmittel und bei einer Temperatur von etwa Raumtemperatur bis etwa 130°C durchgeführt werden. Diese Reaktion erfolgt vorzugsweise bei erhöhter Temperatur, d.h. je nach verwendetem Lösungsmittel entweder bei Rückflusstemperatur des Reaktionsgemisches oder in einem geschlossenen Gefäss, unter Druck.

**Beispiel 1**

(RS)- (4,4'- Bis(dimethylamino)-6,6'-dimethyl-2,2'-biphenylylen)-bis(diphenylphosphin). Smp. 217,5-219°C

Diese Verbindung wurde in Analogie zur Herstellung der im nachfolgenden beschriebenen, nicht aber unter die Ansprüche fallende Verbindung hergestellt.

In einem 100 ml Sulfierkolben versehen mit Tropftrichter, Thermometer, Gummiseptum und Magnetrührer, wurden unter Argonbegasung 680 mg (2 mMol) (RS)-2,2'-Dibrom-6,6'-dimethyl-biphenyl vorgelegt und 20 ml absoluter Diäthyläther mittels einer Spritze injiziert. Die entstandene Lösung wurde auf ca. -90° bis -100°C gekühlt und bei dieser Temperatur tropfenweise mit 5,6 ml einer ca. 1,4M tert.-Butyllithiumlösung in Pentan (8 mMol) versetzt. Die Reaktionslösung wurde noch 20 Minuten bei ca. -100°C nachgerührt, wobei sie sich langsam weisslich trübte. Dann wurde eine Lösung von 880 mg (4 mMol) Chlordiphenylphosphin in 5 ml absolutem Diäthyläther innerhalb 15 Minuten bei ca. -90° bis -100°C eingetropft. Die Reaktionsmischung wurde während 2 Stunden auf Raumtemperatur erwärmen gelassen, wobei bei ca. -60°C die Ausfällung eines weissen Niederschlages einsetzte, und noch 1 Stunde bei Raumtemperatur nachgerührt. Zur Aufarbeitung wurde das Gemisch unter Argon mit Wasser und Dichlormethan versetzt, die organische Phase abgetrennt, mit Wasser gewaschen und durch Filtration über $Na_2SO_4$ getrocknet. Der nach dem Eindampfen erhaltene kristalline Rückstand wurde aus Essigsäureäthylester umkristallisiert, und man erhielt 620 mg (RS)-(6,6'-Dimethyl-2,2'-biphenylylen)-bis(diphenylphosphin) als weisse Kristalle mit einem Schmelzpunkt von 242-243°C. Aus der Mutterlauge wurden nach Kristallisation aus Aethanol/ Toluol weitere 84 mg Produkt mit einem Schmelzpunkt von 240-242°C gewonnen; Gesamtausbeute 704 mg.

Das als Augangsmaterial verwendete (RS)-2,2'-Dibrom-6,6'-dimethyl-biphenyl kann wie folgt hergestellt werden:

Zu einer Lösung von 4,24 g (20 mMol) (RS)-6,6'-Dimethyl-2,2'-biphenyldiamin in 12 ml 48%iger wässriger Bromwasserstofflösung wurde bei -5 bis 0°C eine Lösung von 2,77 g (40,1 mMol) Natriumnitrit in 5 ml Wasser innerhalb von 2 Stunden zugetropft. Die eiskalte, dunkle Diazoniumsalzlösung wurde in einen Tropftrichter transferiert und innerhalb von 15 Minuten zu einer heissen (70-75°C) Lösung von 25 ml einer 2M Kupfer(I)bromid-Lösung in 48%iger wässriger Bromwasserstofflösung getropft. Die Diazoniumsalzlösung wurde dabei durch gelegentliches Zufügen von Eis bei 0°C gehalten. Nach beendigtem Zutropfen wurde noch 5 Minuten am Rückfluss gekocht. Die abgekühlte Reaktionslösung wurde dann dreimal mit je 100 ml Aether extrahiert. Die vereinigten organischen Extrakte wurden zweimal mit je 50 ml 2N HCl, zweimal mit je 50 ml gesättigter $NaHCO_3$-Lösung und dreimal mit je 50 ml Wasser gewaschen und dann über $Na_2SO_4$ getrocknet. Das nach Filtration und Eindampfen erhaltene produkt (6 g) bestand gemäss Gaschromatographie aus einem 8:23:59-Gemisch von 2-Brom-6,6'-dimethyl-biphenyl, 2-Brom-2'-hydroxy-6,6'-dimethyl-biphenyl und (RS)-2,2'-Dibrom-6,6'-dimethyl-biphenyl. Chromatographie an Kieselgel (Hexan/Aether 9:1) lieferte 3,5 g eines 12:87-Gemisches von 2-Brom-6,6'-dimethyl -biphenyl und (RS)-6,6'-Dimethyl-2,2'-dibrom-biphenyl, aus welchem durch zweimaliges Umkristallisieren aus Pentan schliesslich 1,3 g reines (RS)-2,2'-Dibrom-6,6'-dimethyl-biphenyl erhalten wurden mit einem Schmelzpunkt von 111-112°C.

**Beispiel 2**

(R)-(4,4'-Bis(dimethylamino)-6,6'-dimethyl-2,2'-biphenylylen)-bis(diphenylphosphin). Smp. 184-185°C; $[\alpha]_D^{20}$ +25,4 (c = 1% in $CHCl_3$).

(S)-(4,4'-Bis(dimethylamino)-6,6'-dimethyl-2,2' -biphenylylen)-bis(diphenylphosphin). Smp. 184-185°C. $[\alpha]_D^{20}$ -26,3° (C = 1% in $CHCl_3$)

Diese Verbindungen wurden in Analogie zur Herstellung der im nachfolgenden beschriebenen, nicht aber unter die Ansprüche fallenden Verbindung hergestellt.

In einem 0,5 l Sulfierkolben, versehen mit Tropftrichter, Magnetrührer und Argonbegasung, wurden 11,0 g (20 mMol) (RS)-(4,4',6,6'-Tetramethyl-2,2'-biphenylylen)-bis(diphenylphosphin) (hergestellt in zu Beispiel 1 analoger Weise) und 5,80 g (10 mMol) Di-μ-chloro-bis[(R)-2-(1-(dimethylamino)äthyl)phenyl-C,N]dipalladium(II) vorgelegt und mittels einer Injektionsspritze mit 200 ml deoxygeniertem Methanol versetzt. Die Suspension wurde über Nacht bei Raumtemperatur gerührt, wonach eine klare gelbe Lösung entstanden war. Dazu wurde nun innerhalb von 1 Stunde eine Lösung von 1,16 g (11 mMol) $NH_4BF_4$ in 50 ml deoxygeniertem $H_2O$ getropft,

wobei nach Zugabe von ca. der Hälfte der Lösung die Ausfällung eines Niederschlages einsetzte. Nach einer zusätzlichen Rührdauer von 3 Stunden wurde filtriert, der Filterrückstand mit 20 ml Methanol/ $H_2O$ 4:1 gewaschen und am Hochvakuum getrocknet, worauf 6,86 g [(R)-2-(1-Dimethylamino)äthyl)phenyl-C,N][(R)-(4,4',6,6'-tetramethyl-2,2'-biphenylylen)-bis(diphenyl-phosphin)]palladium(II)-tetrafluoroborat in Form eines gelblichen Pulvers erhalten wurden; Smp. 190-193°C (Zers.); $[\alpha]_D^{20}$ +286,0° (c = 1,16% in $CHCl_3$).

Zum oben erhaltenen Filtrat wurde nochmals eine Lösung von 1,16 g (11 mMol) $NH_4BF_4$ in 50 ml $H_2O$ getropft, und das ausgefallene Kristallisat wurde nach einer Nachrührdauer von 1 Stunde abfiltriert, gewaschen mit 20 ml Methanol/$H_2O$ 2:1 und am Hochvakuum getrocknet. Dabei wurden 9,6 g eines gelblichen Pulvers erhalten. Durch Behandeln des zweiten Filtrates mit 200 ml $H_2O$ wurden zusätzliche 0,92 g eines gelblichen Pulvers gewonnen. Die beiden letzteren Kristallfraktionen wurden vereinigt und umkristallisiert aus 40 ml $CH_2Cl_2$/100 ml Aether. Dabei wurden 5,54 g [(R)-2-(1-(Dimethylamino)äthyl)phenyl-C,N]-[(S)-(4,4',6,6'-tetramethyl-2,2'-biphenylylen)-bis(diphenylphosphin)]palladium(II)-tetrafluoroborat als gelbliche Kristalle erhalten. Smp. 198-200°C (Zers.); [*A]$^{20}_D$ -298° (c = 1,19% in $CHCl_3$).

Eine Lösung von 6,30 g (6,85 mMol) [(R)-2-(1-(Dimethyl-amino)äthyl)phenyl-C,N][(R)-(4,4',6,6'-tetramethyl-2,2'-biphenylylen)-bis(diphenylphosphin)]palladium-(II)-tetra-fluoroborat in 85 ml Aceton wurde unter Argon gesetzt, dann mit 17 ml 10 M HCl versetzt, erhitzt und 60 Minuten unter Rückfluss gekocht. Zu der noch warmen gelben Reaktionslösung wurden dann langsam unter gutem Rühren 300 ml $H_2O$ getropft. Die entstandene Suspension wurde noch 30 Minuten weitergerührt. Der Niederschlag wurde abfiltriert, zweimal mit $H_2O$ gewaschen und am Hochvakuum getrocknet, wobei 5,62 g rohes Dichloro-[(R)-(4,4',6,6'-tetramethyl-2,2'-biphenylylen)-bis(diphenylphosphin)]palladium(II) als gelbes Pulver erhalten wurden.

Eine Lösung von 5,57 g dieser Substanz in 100 ml $CH_2Cl_2$ wurde mit 40 ml $H_2O$ versetzt, die Mischung wurde unter Argon gesetzt und dann mit 5,3 g (81 mMol) KCN in einer portion versetzt. Das Zweiphasensystem wurde 30 Minuten kräftig durchgerührt, dann wurde die $CH_2Cl_2$-Phase abgetrennt und die wässrige Lösung noch einmal mit $CH_2Cl_2$ extrahiert. Die vereinigten organischen Phasen wurden gewaschen ($H_2O$, gesättigte NaCl-Lösung), getrocknet ($Na_2SO_4$), filtriert und eingedampft. Der gelbe kristalline Rückstand wurde in 15 ml Toluol aufgenommen, und die Lösung wurde mit Aktivkohle behandelt, filtriert über Celite und wiederum eingedampft. Umkristallisation des Rückstandes aus Aethanol/Toluol lieferte 2,70 g (R)-(4,4',6,6'-Tetra-methyl-2,2'-biphenylylen)-bis(diphenylphosphin) als weisse Kristalle vom Smp. 217-218°C; $[\alpha]_D^{20}$ = -21,5° (c = 1,03% in $CHCl_3$). Aus der Mutterlauge wurden zusätzliche 0,5 g Substanz vom Smp. 215,5-218°C isoliert; die Gesamtausbeute beträgt somit 3,2 g.

Die Freisetzung des entsprechenden (S)-(4,4',6,6'-Tetramethyl-2,2'-biphenylylen)-bis(diphenylphosphin) erfolgte in analoger Weise und man erhielt ein Produkt mit einem Smp. von 217,5-219°C. $[\alpha]^{20}_D$ +21,4° (c = 1,11% in $CHCl_3$).

**Patentansprüche**

I. Chirale, in der (R)- oder (S)-Form vorliegende Phosphorverbindungen der allgemeinen Formel

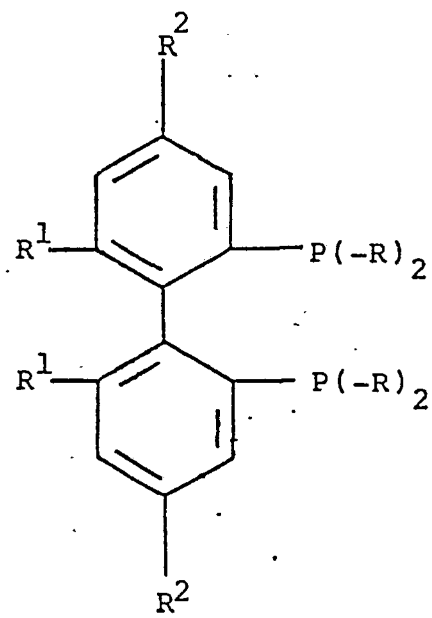

I

worin $R^1$ $C_1C_4$-Alkyl, R Phenyl oder Methyl- oder Fluorsubstituiertes Phenyl und $R^2$ Di-$C_1$-$C_4$ -Alkylamino bedeuten.

2. (R)- oder (S)-(4,4'-Bis(dimethylamino-6,6'-dimethyl-2,2'-biphenylylen)-bis(diphenylphosphin).

3. Verfahren zur Herstellung von chiralen, in (R)- oder (S)-Form vorliegenden Phosphorverbindungen der allgemeinen Formel

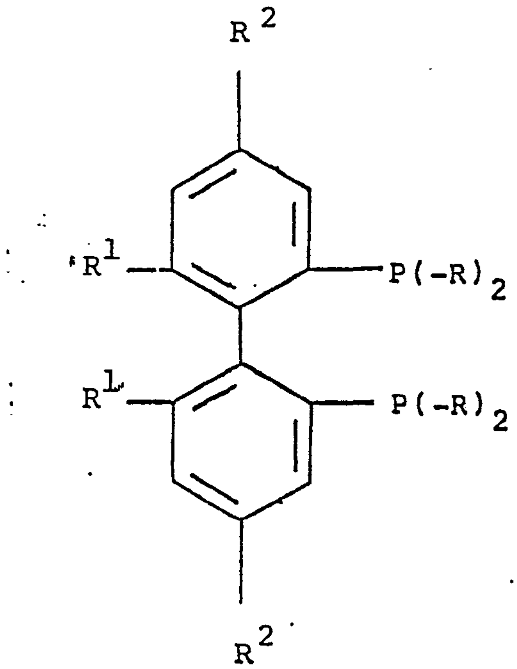

I

worin $R^1$ $C_1$-$C_4$-Alkyl, R Phenyl oder Methyl- oder Fluorsubstituiertes Phenyl und $R^2$ Di-$C_1$-$C_4$-Alkylamino bedeuten,

dadurch gekennzeichnet, dass man

a) eine racemische oder optisch aktive Verbindung der Formel

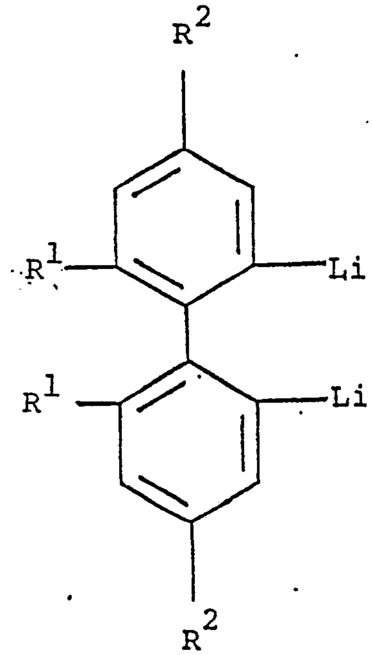

II

worin $R^1$ und $R^2$ die obige Bedeutung haben mit einer Verbindung der allgemeinen Formel

$X - P(-R)_2$ III > > > worin R die obige Bedeutung hat und X eine austretende Gruppe darstellt,

umsetzt, oder

b) eine racemische oder optisch aktive Verbindung der allgemeinen Formel II mit einer Verbindung der allgemeinen Formel

$$X - \overset{O}{\overset{\parallel}{P}}(-R)_2 \qquad IV$$

worin R und X die obige Bedeutung haben, umsetzt und die so erhaltene Verbindung der allgemeinen Formel

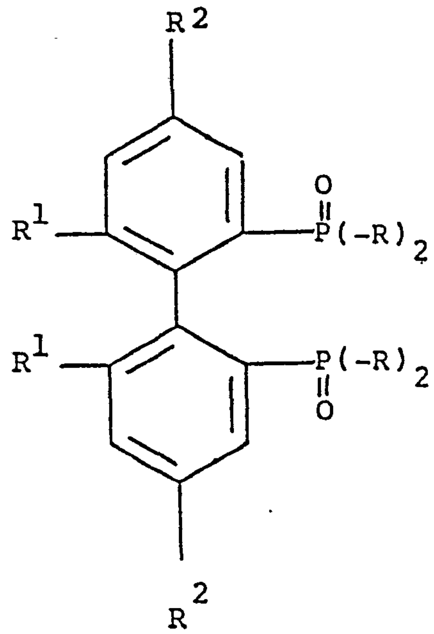

V

worin $R^1$, R und $R^2$ die obige Bedeutung haben, reduziert und, gegebenenfalls, eine erhaltene racemische Verbindung der Formel I in die optischen Antipoden auftrennt.

4. Komplexe von Phosphorverbindungen der Formel I gemäss Anspruch 1 mit einem Metall der Gruppe VIII.

5. Komplexe gemäss Anspruch 4, worin als Metall der Gruppe VIII Rhodium/Iridium oder Cobalt, vorzugsweise Rhodium, enthalten ist.

6. Verwendung der phosphorverbindungen der allgemeinen Formel I gemäss Anspruch 1, in Form ihrer Komplexe mit einem Metall der Gruppe VIII, als Katalysatoren bei asymmetrischen Hydrierungen und für enantioselektive Wasserstoffverschiebungen in prochiralen allylischen Systemen.

**Patentansprüche**

(Oesterreich)

1. Verfahren zur Herstellung von chiralen, in (R)- oder (S)-Form vorliegenden Phosphorverbindungen der allgemeinen Formel

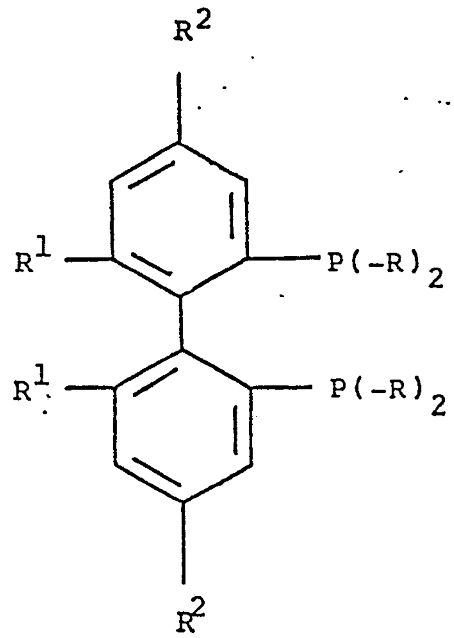

I

worin $R^1$ $C_1$-$C_4$-Alkyl, R Phenyl oder Methyl- oder Fluorsubstituiertes Phenyl und $R^2$ Di-$C_1$-$C_4$-Alkylamino bedeuten, dadurch gekennzeichnet, dass man

a) eine racemische oder optisch aktive Verbindung der Formel

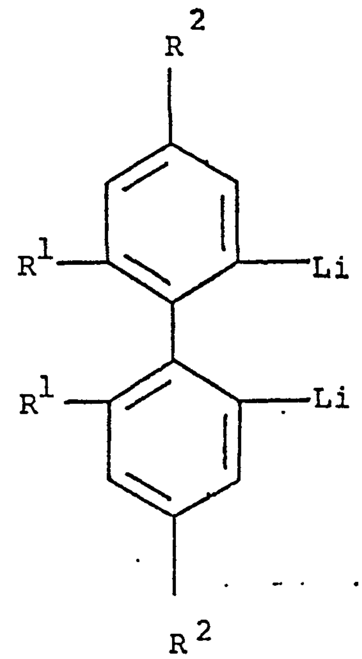

II

worin $R^1$ und $R^2$ die obige Bedeutung haben, mit einer Verbindung der allgemeinen Formel
$X - P(-R)_2$ III
worin R die obige Bedeutung hat und X eine austretende Gruppe darstellt,
umsetzt, oder
b) eine racemische oder optisch aktive Verbindung der allgemeinen Formel II mit einer Verbindung der allgemeinen Formel

$$X - \overset{O}{\overset{\|}{P}}(-R)_2 \qquad IV$$

worin R und X die obige Bedeutung haben, umsetzt und die so erhaltene Verbindung der allgemeinen Formel

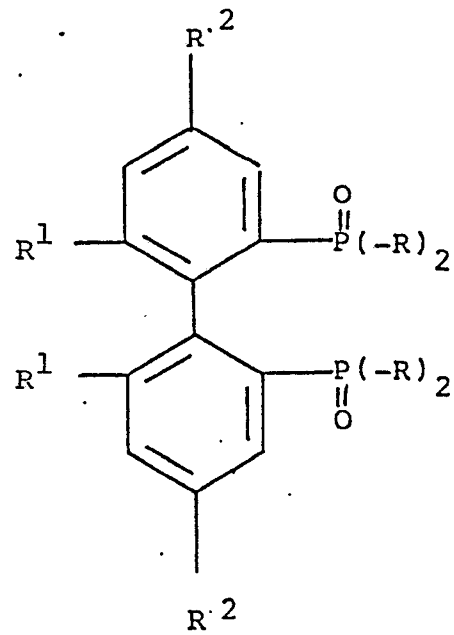

V

worin $R^1$, R und $R^2$ die obige Bedeutung haben,

reduziert und gegebenenfalls, eine erhaltene racemische Verbindung der Formel I in die optischen Antipoden auftrennt.

2. Verfahren gemäss Anspruch 1 dadurch gekennzeichnet, dass man eine Verbindung der Formel II, worin $R^2$ Dimethylamino bedeutet, mit einer Verbindung der Formel III oder IV, worin R unsubstituiertes Phenyl bedeutet, umsetzt.

3. Verwendung der Phosphorverbindungen der allgemeinen Formel I gemäss Anspruch 1, in Form ihrer Komplexe mit einem Metall der Gruppe VIII, als Katalysatoren bei asymmetrischen Hydrierungen und für enantioselektive Wasserstoffverschiebungen in prochiralen allylischen Systemen.

**Claims**

for the contracting states: BE, CH, DE, FR, GB, IT, LI, NL

1. Chiral phosphorus compounds of the general formula which are present in the (R)- or (S)-form

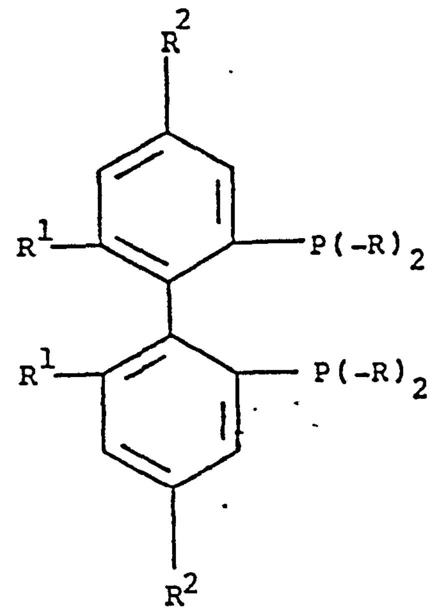

I

wherein $R^1$ signifies $C_1$-$C_4$-alkyl, R signifies phenyl or methyl- or fluoro-substituted phenyl and R signifies di-$C_1$-$C_4$-alkylamino.

2. (R)- or (S)-(4,4'-bis(dimethylamino)-6,6'-di-methyl-2,2'-biphenylylene)-bis(diphenylphosphine).

3. A process for the manufacture of chiral phosphorus compounds of the general formula which are present in the (R)- or (S)-form

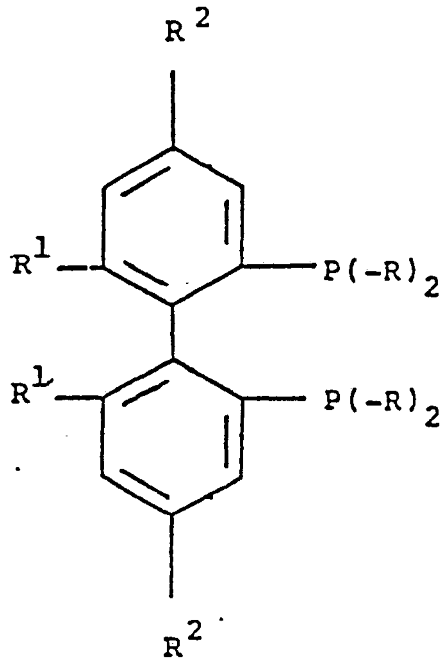

I

wherein $R^1$ signifies $C_1$-$C_4$-alkyl, R signifies phenyl or methyl- or fluoro-substituted phenyl and $R^2$ signifies di-$C_1$-$C_4$-alkylamino,

characterized by

a) reacting a racemic or optically active compound of the formula

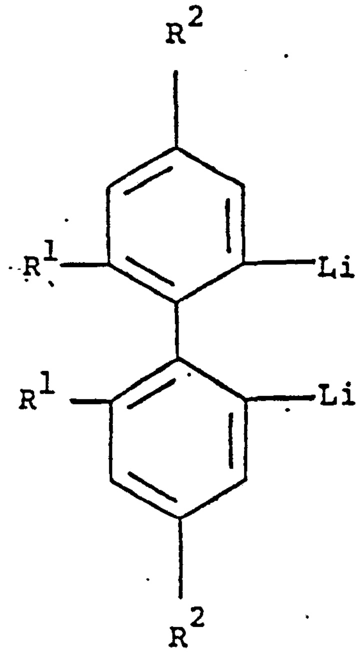

II

wherein $R^1$ and $R^2$ have the above significance, with a compound of the general formula

$X - P(-R)_2$ III

wherein R has the above significance and X represents a leaving group,

or

b) reacting a racemic or optically active compound of general formula II with a compound of the general formula

$$X - \overset{O}{\overset{\|}{P}}(-R)_2 \qquad IV$$

wherein R and X have the above significance, and reducing the thus-obtained compound of the general formula

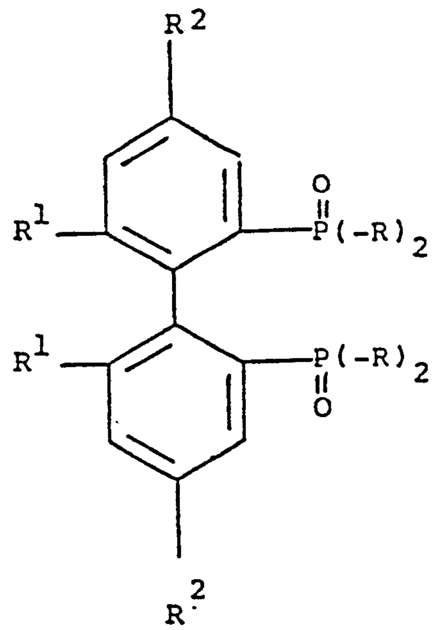

V

wherein $R^1$, R and $R^2$ have the above significance, and, if necessary, resolving a racemic compound of formula I obtained into the optical antipodes.

4. Complexes of phosphorus compounds of formula I in accordance with claim 1 with a metal of Group VIII.

5. Complexes in accordance with claim 4, wherein rhodium, iridium or cobalt, preferably rhodium, is present as the metal of Group VIII.

6. The use of the phosphorus compounds of general formula I in accordance with claim 1 in the form of their complexes with a metal of Group VIII as catalysts in asymmetric hydrogenations and for enantioselective hydrogen displacements in prochiral allylic systems.

**Claims**

for the contracting state: Austria

1. A process for the manufacture of chiral phosphorus compounds of the general formula which are present in the (R)- or (S)-form

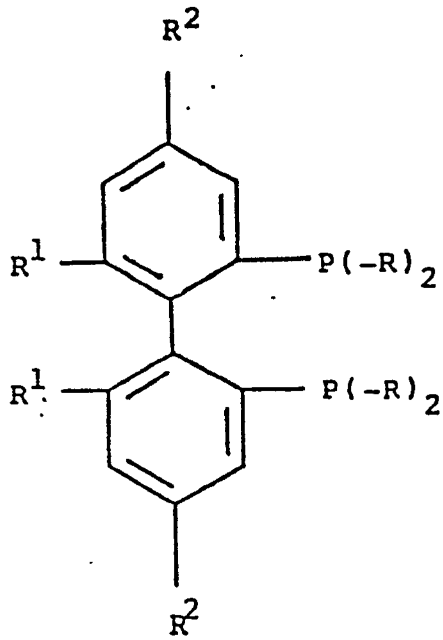

I

wherein $R^1$ signifies $C_1$-$C_4$-alkyl, R signifies phenyl or methyl- or fluoro-substituted phenyl and $R^2$ signifies di-$C_1$-$C_4$-alkylamino,

characterized by

a) reacting a racemic or optically active compound of the formula

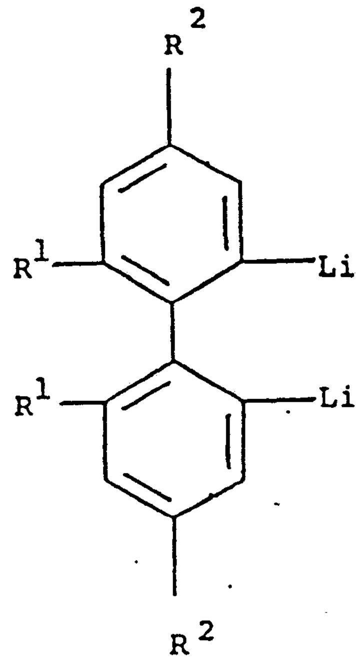

II

wherein $R^1$ and $R^2$ have the above significance, with a compound of the general formula
$X - P(-R)_2$ III
wherein R has the above significance and X represents a leaving group,
or
b) reacting a racemic or optically active compound of general formula II with a compound of the general formula

$$X - \overset{O}{\overset{\|}{P}}(-R)_2 \qquad IV$$

wherein R and X have the above significance,
and reducing the thus-obtained compound of the general formula

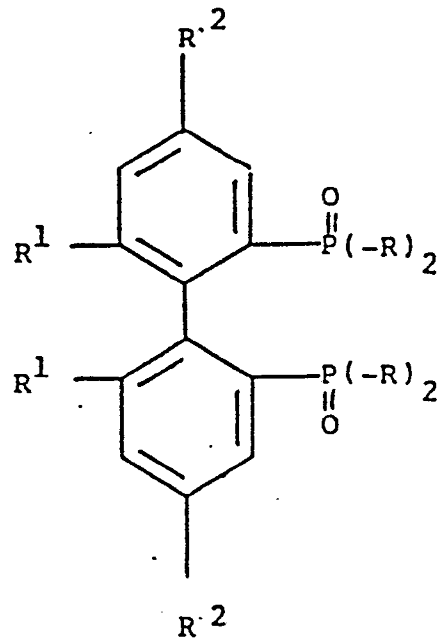

V

wherein $R^1$, R and $R^2$ have the above significance, and, if necessary, resolving a racemic compound of formula I obtained into the optical antipodes.

2. A process in accordance with claim 1, characterized in that a compound of formula II in which $R^2$ signifies dimethylamino is reacted with a compound of formula III or IV in which R signifies unsubstituted phenyl.

3. The use of the phosphorus compounds of general formula I in accordance with claim 1 in the form of their complexes with a metal of Group VIII as catalysts in asymmetric hydrogenations and for enantioselective hydrogen displacements in prochiral allylic systems.

**Revendications**

pour les Etats contractants: BE, CH/LI, DE, FR, GB, IT, NL

1. Composés de phosphore chiraux, présents sous forme (R) ou (S), de formule générale

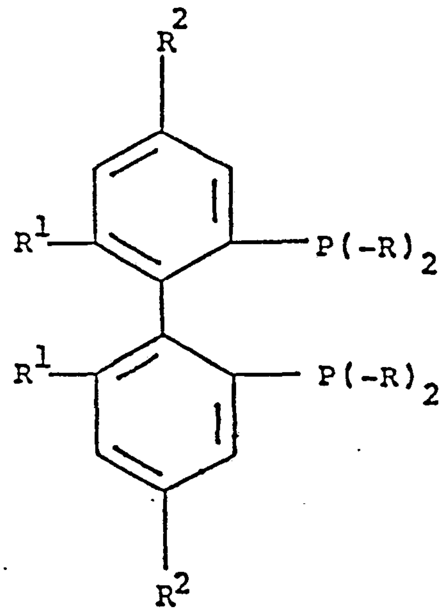

I

où R1 représente un alcoyle en C1 à C4, R représente un phényle ou un phényle substitué par un méthyle ou un fluor et R2 représente un di-alcoylamino en C1 à C4.

2. (R)- ou (S)-(4,4'-bis(diméthylamino)-6,6'-diméthyl-2,2'-biphénylylène)-bis(diphénylphosphine).

3. Procédé de préparation de composés de phosphore chiraux, présents sous forme (R) ou (S), de formule générale

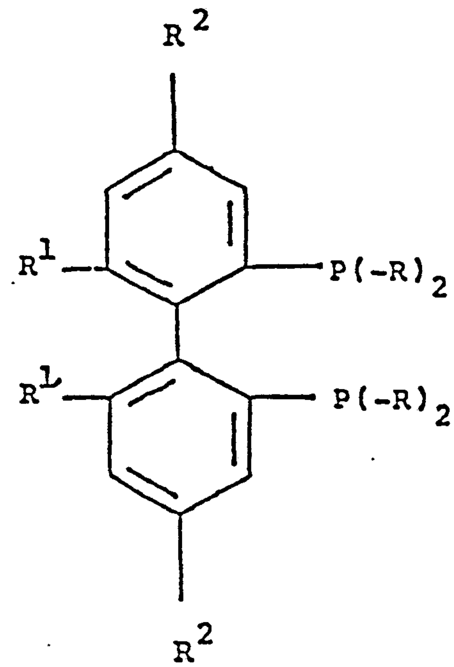

I

où R1 représente un alcoyle en C1 à C4, R représente un phényle ou un phényle substitué par un méthyle ou un fluor et R2 représente un di-alcoylamino en C1 à C4, caractérisé en ce que

a) on fait réagir un composé racémique ou optiquement actif de formule

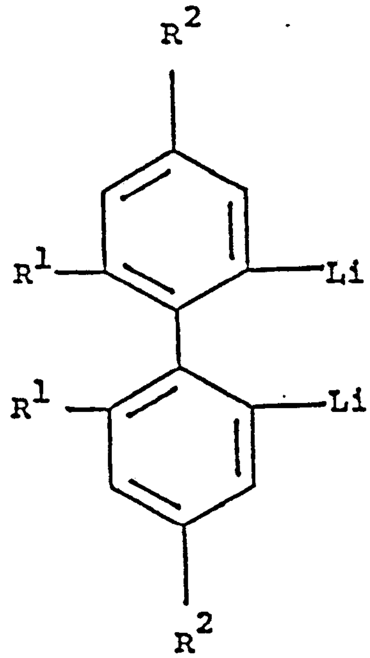

II

ou R1 et R2 ont la signification donnée ci-dessus, avec un composé de formule générale

X - P(-R)$_2$ III

où R a la signification donnée ci-dessus et X représente un groupe sortant, ou

b) on fait réagir un composé racémique ou optiquement actif de formule générale II avec un composé de formule générale

$$X - \overset{O}{\overset{\|}{P}}(-R)_2 \qquad IV$$

où R et X ont la signification donnée ci-dessus, et on réduit le composé ainsi obtenu de formule générale

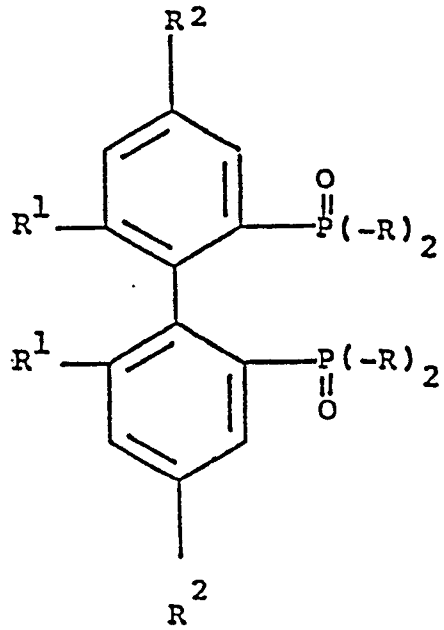

V

où R1, R et R2 ont la signification donnée ci-dessus, et, le cas échéant, on sépare un composé de formule I racémique obtenu en les antipodes optiques.

4. Complexes de composés de phosphore de formule I selon la revendication 1 avec un metal du groupe VIII.

5. Complexes selon la revendication 4, contenant comme métal du groupe VIII le rhodium, l'iridium ou le cobalt, de préférence le rhodium.

6. Application des composés de phosphore de formule générale I selon la revendication 1, sous la forme de leurs complexes avec un métal du group VIII comme catalyseurs dans les hydrogénations asymétriques et pour les déplacements d'hydrogène énantiosélectifs dans les systèmes allyliques prochiraux.

**Revendications**

pour l'Etat contractant: Autriche

1. Procédé de préparation de composés de phosphore chiraux, présents sous forme (R) ou (S), de formule générale

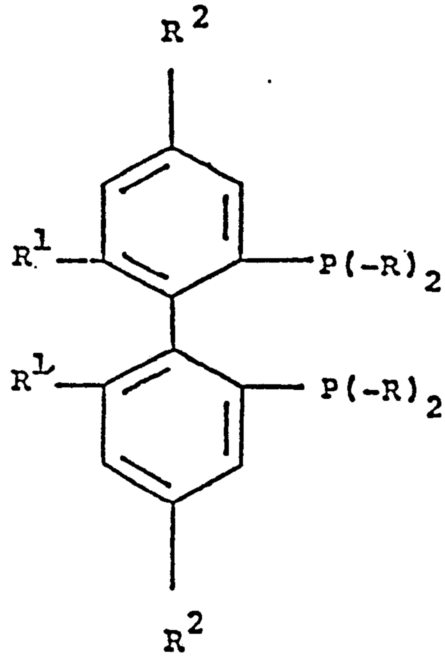

I

où R1 reprèsente un alcoyle en C1 à C4, R représente un phényle ou un phényle substitué par un méthyle, ou un fluor et R2 représente un di-alcoylamino en C1 à C4, caractérisé en ce que

a) on fait réagir un composé racémique ou optiquement actif de formule

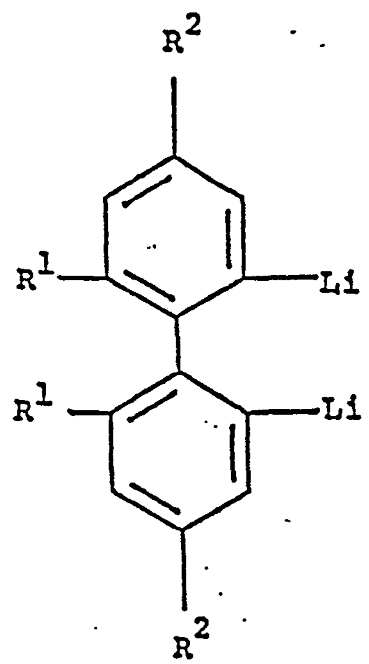

II

2. Procédé selon la revendication 1, caracterisé en ce qu'on fait réagir un composé de formule II où R2 représente un diméthylamino, avec un composé de formule III ou IV, où R représente un phényle non substitué.

3. Application des composés de phosphore de formule générale I selon la revendication 1, sous la forme de leurs complexes avec un métal du groupe VIII comme catalyseurs dans les hydrogénations asymétriques et pour les déplacements d'hydrogène énantiosélectifs dans les systèmes allyliques prochiraux.